Europäisches Patentamt

European Patent Office

Office européen des brevets

(11) Veröffentlichungsnummer: **0 384 934**
**A1**

## (12) EUROPÄISCHE PATENTANMELDUNG

(21) Anmeldenummer: **89103687.3**

(22) Anmeldetag: **02.03.89**

(51) Int. Cl.⁵: **G01L 9/00, G01L 19/06**

(43) Veröffentlichungstag der Anmeldung:
**05.09.90 Patentblatt 90/36**

(84) Benannte Vertragsstaaten:
**AT BE CH DE ES FR GB GR IT LI LU NL SE**

(71) Anmelder: **Siemens Aktiengesellschaft**
**Wittelsbacherplatz 2**
**D-8000 München 2(DE)**

(72) Erfinder: **Binder, Josef, Dr. rer. nat.**
**Staltacherstrasse 12 b**
**D-8127 Iffeldorf(DE)**
Erfinder: **Obermeier, Ernst, Dr. rer. nat.**
**Allgäuer Strasse 106**
**D-8950 Kaufbeuren(DE)**
Erfinder: **Schrey, Ulrich, Dr. rer. nat.**
**Fichtenstrasse 28**
**D-8501 Seukendorf(DE)**

(54) **Drucksensor.**

(57) Drucksensor, bestehend aus einem Aktivteil aus Halbleitermaterial mit einer Rückseite (12), einer piezoresistive Widerstände (2) mit Anschlüssen tragenden Seite und einem Trägerteil mit Leiterbahnen (31, 311). Aktivteil und Trägerteil sind durch einen Ring (5) verbunden, welcher flach auf dem Aktivteil liegt und die Widerstände (2) umgibt, wodurch zwischen Aktivteil und Trägerteil ein Hohlraum (10) entsteht. Die Anschlüsse für die Widerstände (2) sind isoliert durch die Passivierungsschicht (42) unterhalb des Ringes (5) mittels einer Leiterbahn (22) nach außen geführt. Metallhöcker (3), die die gleiche Höhe wie der Ring (5) haben, verbinden die Leiterbahnen (22) auf dem Aktivteil mit den entsprechenden Leiterbahnen (31, 311) auf dem Trägerteil. Das Aktivteil ist so auf dem Trägerteil befestigt, daß die Widerstände (2) zum Trägerteil zeigen und der zu messende Druck auf die Rückseite (12) des Aktivteils gelangt. Im Betrieb drückt der Meßdruck das Aktivteil gegen das Trägerteil, wodurch ein Abreißen des Aktivteils vom Trägerteil bei hohem Druck unterbunden ist.

FIG 1

## Drucksensor

Die Erfindung betrifft einen Drucksensor gemäß Oberbegriff von Anspruch 1.

Drucksensoren zur Messung des Druckes der obengenannten Gattung sind beispielsweise aus der EP 0 215 140 bekannt. Das Problem, ein aggressives Medium von der empfindlichen Chipvorderseite zu trennen, wird dort durch eine Trennmembran (z. B. aus Edelstahl) und eine Ölvorlage gelöst. Solche Drucksensoren sind jedoch sehr aufwendig zu fertigen. Die elektrische Verbindung zwischen den Anschlüssen des piezoresistiven Widerstands auf dem Chip und den Leiterbahnen des Trägers wird durch Drahtbonds hergestellt.

Der Erfindung liegt daher die Aufgabe zugrunde, einen Drucksensor zu schaffen, welcher die Druckmessung auch aggressiver Medien ohne Trennmembran gestattet.

Die Lösung der Aufgabe ist in Anspruch 1 gekennzeichnet.

Die Erfindung beruht auf der Erkenntnis, daß die Rückseite des Chips unempfindlich gegenüber den meisten aggressiven Medien ist. Daher wird bei der Erfindung der Druck auf die unempfindliche Rückseite des Chips gebracht und die aktive Seite mit den empfindlichen Widerständen zeigt gegen das Trägerteil.

Eine Weiterbildung der Erfindung zum Einsatz bei höheren Drücken ist durch Unteranspruch 2 gekennzeichnet. Die Metallhöcker, welche die elektrische Verbindung zwischen dem piezoresistiven Widerstand auf dem Aktivteil und den Leiterbahnen auf dem Trägerteil herstellen, sind bei bestimmungsgemäßen Einsatz des Sensors durch den zu messenden Druck keiner mechanischen Zugbelastung ausgesetzt sind, sondern werden durch den zu messenden Druck sogar noch fester an die Kontaktstellen gepreßt.

Eine Weiterbildung der Erfindung für einen Drucksensor mit Referenzdruckraum ist durch den Unteranspruch 3, eine vorteilhafte Ausgestaltung der Erfindung, um die Empfindlichkeit zu erhöhen, ist durch Unteranspruch 4 gekennzeichnet.

Die Erfindung wird anhand von drei Figuren und der dazugehörigen Bezugszeichen- und Begriffsliste erläutert. Es zeigen:

Figur 1 und 2 jeweils einen Querschnitt durch zwei Ausführungsbeispiele von Drucksensoren und

Figur 3 einen verkleinerten Schnitt entlang der Linie III-III in Figur 2.

Bei beiden Ausführungsbeispielen ist auf den Chip 1 eine Epitaxieschicht 11 aufgebracht, auf der zwei längliche piezoresistive Widerstände 2 liegen. Die Kontaktbrücke 21; die Leiterbahn 22 und eine weitere Kontaktbrücke 23 sind sichtbar. Eine erste Passivierungsschicht 41 bedeckt die Epitaxieschicht 11 und die piezoresistiven Widerstände 2. Die Passivierungsschicht 41 läßt lediglich die Kontaktbrücke 21 frei. Eine zweite Passivierungsschicht 42 bedeckt die Leiterbahn 22 mit Ausnahme der Kontaktbrücke 23. Ein Metallhöcker 3 steht einerseits mit der Kontaktbrücke 23 andererseits mit einer auf dem Träger 7 verlaufenden Leiterbahn 31 bzw. 311 in elektrischer Verbindung.

Der Bereich des Chips 1, welcher die piezoresistiven Widerstände 2 trägt, wird von einem Metallring 5 umgeben. Über eine Metallisierung 51 auf dem Träger 7 wird der Metallring 5 direkt mit dem Träger 7 verbunden. Die Passivierungsschicht 43 bzw. 431 umgibt dabei die Verbindungsstelle zwischen Ring 5 und Metallisierung 51. Zwischen Halbleiterchip 1 und Träger 7 entsteht so ein hermetisch abgeschlossener Hohlraum 10. In diesem Hohlraum 10 kann inertes Gas oder Vakuum eingeschlossen werden, um eine Druckreferenz zu erhalten. Der Metallhöcker 3 und der Metallring 5 sind aus demselben Material hergestellt und können auf der Chipoberfläche aufgebracht werden. Der Träger 7 besteht aus einem dem thermischen Dehnungskoeffizienten des Chips 1 angepaßten Material. Die auf dem Träger 7 aufgebrachten Leiterbahnen 31 bzw. 311 und die Metallisierung 51 sind bis auf die für die elektrische und mechanische Verbindung benötigten Flächen mit einer Passsivierungsschicht 43 bzw. 431 bedeckt. Der Chip 1 wird mit dem Träger 7 durch eine geeignete Verbindungstechnik (z.B. Löten im Reflow-Verfahren) verbunden. Im Bereich der piezoresistiven Widerstände 2 ist der Chip 1 bis auf die Epitaxieschicht 11 abgetragen, so daß eine Ausnehmung 6 von der Rückseite 12 bis zur Epitaxieschicht 11 führt, welche auf Druck mit reversibler Verformung reagiert.

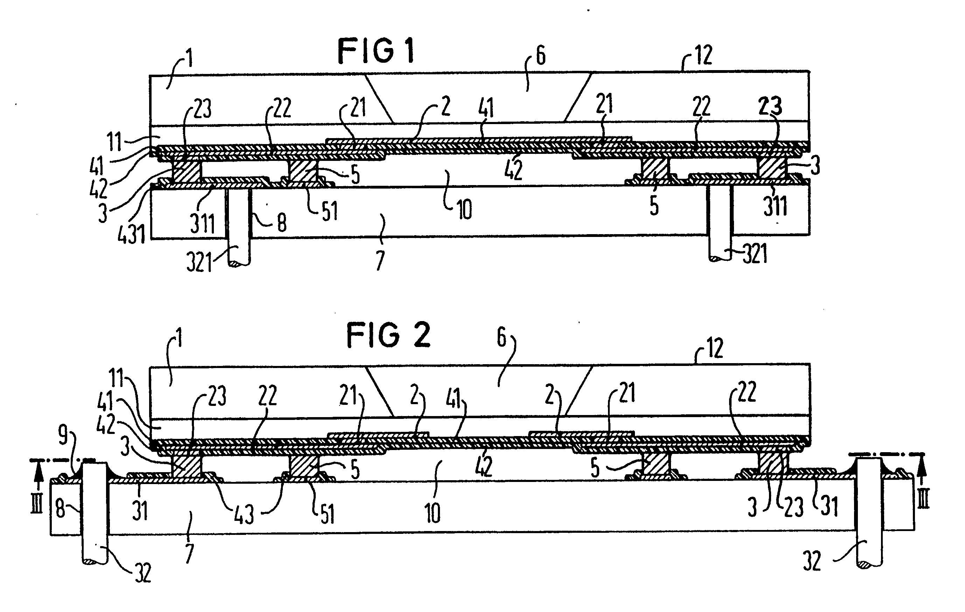

Gemäß Figur 2 sitzt in einer durch den Träger 7 und Leiterbahn 31 reichenden Bohrung ein Kontaktstift 32, der durch eine Lötverbindung 9 elektrisch mit der Leiterbahn 31 verbunden ist. Über die Kontaktstifte 32 kann später der komplette Drucksensor mit einer Schaltung verbunden werden. Der vollständige elektrische Signalweg verläuft über Kontaktstifte 32, Lötverbindung 9, Leiterbahn 31, Metallhöcker 3, Kontaktbrücke 23, Leiterbahn 22, Kontaktbrücke 21 zum piezoresistiven Widerstand 2. In dieser Darstellungsform ist der zweite Anschluß für den piezoresistiven Widerstand nicht sichtbar. Er verläuft jedoch in gleicher Weise wie für den sichtbaren Anschluß beschrieben, nach außen zu einem Kontaktstift.

Figur 1 zeigt ein Ausführungsbeispiel, bei welchem eine besonders kompakte Bauweise des gesamten Sensors realisiert ist. Dabei ist der Kontaktstift 321 innerhalb der vom Chip 1 bedeckten Fläche am Träger 7 befestigt. In Figur 1 ist der Schnitt so gewählt, daß er längs durch den piezoresistiven Widerstand 2 verläuft. Man kann hier besonders gut die elektrischen Leitungswege über den piezoresistiven Widerstand 2 nachvollziehen. Der Weg beginnt bei Kontaktstift 321, führt über die Leiterbahn 311 und dem Metallhöcker 3 an die Kontaktbrücke 23, von dort über die Leiterbahn 22 zu einer weiteren Kontaktbrücke 21 bis zum piezoresistiven Widerstand 2, von dort über eine Kontaktbrücke 21 und eine Leiterbahn 22 zu einer Kontaktbrücke 23, über einen Metallhöcker 3 und eine Leiterbahn 311 zum zweiten Kontaktstift

Der in Figur 1 gezeigte Aufbau erlaubt es vorteilhaft, eine Vielzahl von Sensoren rationell zu fertigen. Dazu wird ein ungeschnittener Wafer, auf dem sich eine große Anzahl von Chips 1 mit Widerständen 2, Leiterbahnen 22, Kontaktbrücken 21, Metallhöckern 3 und Ringen 5 befindet, auf eine einzige Trägerplatte gesetzt. Die Trägerplatte besitzt pro Chip 1 auf dem Wafer die entsprechenden Leiterbahnen 311, Passivierungen 431 und Metallisierungen 51. Die Kontaktstifte 321 werden in den Bohrungen 8 befestigt. In einem Schritt werden alle Chips 1 und die Trägerplatte z.B. durch Reflowlöten zu einem Sandwich verbunden. Beim Reflowlöten werden die Kontaktstifte 321 mit den Leiterbahnen 311 elektrisch verbunden. Nach dem Verbinden wird das Sandwich zersägt, so daß eine Vielzahl von Drucksensoren gemäß Figur 1 entsteht. Dabei entfällt das aufwenige Positionieren jedes einzelnen Chips 1 auf seinem zugehörigen Träger 7.

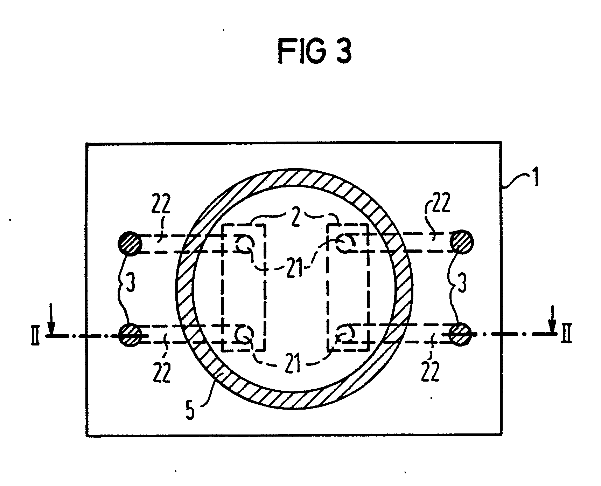

Die Figur 3 zeigt in geschnittener Darstellung den Drucksensor aus Figur 2 von unten betrachtet. Die Schnittebene verläuft zwischen Aktivteil und Trägerteil. Man erkennt den Metallring 5, welcher die piezoresistiven Widerstände 2 umschließt. Über die Kontaktbrücke 21 und die Leiterbahn 22 wird die elektrische Verbindung zu Metallhöcker 3 hergestellt. Die piezoresistiven Widerstände 2, die Kontaktbrücken 21 und die Leiterbahnen 22 sind gestrichelt dargestellt, da sie durch mindestens eine der beiden Passivierungsschichten 41, 42 bedeckt sind.

## Ansprüche

1. Drucksensor mit einem Aktivteil und einem Trägerteil, wobei
- das Aktivteil einen Chip (1) aus Halbleitermaterial mit einer Rückseite (12) und einer aktiven Seite aufweist, der auf der aktiven Seite mindestens einen piezoresistiven Widerstand (2) mit Anschlüssen trägt,
- das Trägerteil einen Träger (7) mit Leiterbahnen (31, 311) aufweist, auf dem das Aktivteil flachliegend befestigt ist,
- die Anschlüsse des Aktivteils mit zugehörigen Leiterbahnen (31, 311) des Trägerteiles verbunden sind,
**dadurch gekennzeichnet,**
- daß die aktive Seite des Chips (1) dem Trägerteil und die Ruckseite (12) des Chips (1) dem zu messenden Druck zugewandt ist.

2. Drucksensor nach Anspruch 1 **dadurch gekennzeichnet, daß**
- zwischen Chip (1) und Widerstand (2) eine Epitaxieschicht (11) aus Halbleitermaterial liegt,
- die aktive Seite mit zwei Passivierungsschichten (41, 42) bedeckt ist,
die Anschlüsse für den mindestens einen Widerstand (2) über Brücken (23) in der Passivierungsschicht (42) zugänglich sind,
- die Anschlüsse für den Widerstand (2) im Bereich der Brücken (23) mittels Metallhöcker (3) elektrisch mit den Leiterbahnen (31, 311) auf dem Träger (7) verbunden sind.

3. Drucksensor nach Anspruch 2, **dadurch gekennzeichnet, daß**
- das Aktivteil und das Trägerteil durch einen Metallring (5) verbunden sind, welcher flach auf dem Aktivteil liegt und den mindestens einen Widerstand (2) umgibt, wodurch zwischen Aktivteil und Trägerteil ein Hohlraum (10) entsteht,
- die Anschlüsse für den mindestens einen Widerstand (2) mittels einer Leiterbahn (22) unterhalb der Passivierungsschicht 42) aus dem Hohlraum (10) nach außen herausgeführt sind,
- die Anschlüsse außerhalb des Hohlraums (10) über Brücken (23) in der Passivierungsschicht (42) zugänglich sind.

4. Drucksensor nach Anspruch 2, **dadurch gekennzeichnet, daß**
- der Chip (1) im Bereich des mindestens einen Widerstands (2) eine Ausnehmung (6) hat, die von der Rückseite (12) bis auf die Epitaxieschicht (11) reicht,
der zu messende Druck auf die Rückseite der Epitaxieschicht (11) gelangt.

# FIG 1

# FIG 2

EP 0 384 934 A1

# FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 215 140 (M. KUNZ)<br>--- | | G 01 L 9/00<br>G 01 L 19/06 |
| X | GB-A-2 042 258 (NISSAN MOTOR COMPANY LTD.)<br>* Zusammenfassung; Figur 3; Anspruch 1 * | 1 | |
| A | ---<br> | 4 | |
| Y | DE-B-2 429 894 (MOTOROLA INC.)<br>* Figur 4; Ansprüche 1-3 *<br>--- | 1,4 | |
| Y | DE-A-3 315 266 (FUJI ELECTRIC CO. LTD.)<br>* Figur 3; Zusammenfassung *<br>--- | 1,4 | |
| X | (SENSORTS & ACTUATORS)<br>Band 13, Nr. 1, Januar 1988, Seiten 53-62, Lausanne, Schweiz; I. IGARASHI: "Semiconductor dynamic sensors" *<br>Seiten 60,61 * | 1 | |
| A | idem<br>--- | 2 | RECHERCHIERTE SACHGEBIETE (Int. Cl.5)<br><br>G 01 L 9/00<br>G 01 L 19/06 |
| A | DE-A-3 500 613 (H. W. KELLER)<br>* Zusammenfassung, Figuren 3a,3b,4; Ansprüche 1,7 *<br>------ | 1,2 | |

Der vorliegende Recherchenbericht wurde für alle Patentansprüche erstellt

| Recherchenort | Abschlußdatum der Recherche | Prüfer |
|---|---|---|
| BERLIN | 16-10-1989 | KOEHN G |